# EUROPEAN PATENT SPECIFICATION

(11) **EP 2 345 535 B1**
(45) Date of publication and mention of the grant of the patent: **28.09.2016**
(21) Application number: 10150938.8
(22) Date of filing: 18.01.2010
(51) Int. Cl.: B32B 5/02, B32B 5/24, B32B 7/12, B32B 15/04, B32B 15/20, B32B 15/08, B32B 5/18

(54) **Fire protection system for expanded polymers**
Brandschutzsystem für expandierte Polymere
Système de protection contre les incendies pour polymères expansés

(43) Date of publication of application: 20.07.2011
(73) Proprietor: Armacell Enterprise GmbH & Co. KG, 12529 Schönefeld OT Waltersdorf (DE)
(72) Inventor: Weidinger, Jürgen, 48167 Münster (DE); Quante, Heribert, 37696 Marienmünster (DE); Vielmeyer, Friedhelm, 48167 Münster (DE)
(74) Representative: von Füner, Nicolai

(56) References cited:
- GB-A- 2 378 919
- US-A- 4 073 998
- US-A- 4 279 958
- US-A- 4 414 265
- US-A- 5 698 302

## Description

The present invention relates to versatile multi-layer coating systems for anti-flame and smoke suppression purposes especially for protection of expanded organic polymers leading to improved fire retardant properties together with low smoke generation, the process for manufacturing of such systems, the application of such systems on substrates and the use of such systems and resulting composites.

Expanded or cellular polymeric structures based on organics became important in a lot of fields of application, such as in insulation against temperature gradients, noise shielding, vibration damping, lightweight construction etc. However, due to their organic, which means combustible nature, fire retardancy and the issues associated herewith always show to be an obstacle for broadening the applicability by approving organic foams and sponges for any use where flammability, flame spread and smoke generation might be a problem. Especially smoke creation and smoke density became an issue of discussion during recent years. A lot of efforts have been taken to improve the fire retardancy of the polymers themselves, however, these methods, e.g. using flame retardant agents, non-combustible fillers etc., only have a retarding, but not fully preventing effect and even may severely impact the expansion or foaming of the polymers as well as other final properties targeted for the application; additionally, as soon as there is a real burn and/or flashover (where temperatures easily will exceed 900 °C permanently) the organic polymer will continue burning no matter how much flame retardant agents were put into it, and the situation will get even worse when speaking about an organic foam where oxygen for accelerating the combustion is permanently present within the foam cells, and the cell walls are thin and easy to attack and decompose. Therefore, some work has been done to protect the expanded polymers already before they catch fire, i.e. from the side where a possible fire attack may arise, which means, on the surface(s) of the foamed product. A sector being very concerned by flammability issues are the cable and the building industry, and most of the examinations had indeed been carried out in these fields of application. One could think of composites where specially flame-protected polymers form the outer layer, as in e.g. JP 2002167886, US 6066580, or GB 2122232, but the most widespread approach for fire protection is the use of an outer layer consisting of a metal foil or sheet, mostly aluminium due to applicability and cost issues, often together with one or more inner layer(s) showing no or low combustibility. This technology has been used to almost an exhaust in many varieties: in GB 2174335 (aluminium honeycombs filled with rigid foam), GB 2161655 (metal foil with mineral wool underneath), EP 91255 (foil layer, wire netting underneath), GB 1454493, US 4292369 and US 4296170 (outer foil in some varieties), DE 19815933 (perforated foil, fibres underneath), JP 2003055622 and JP 11293894 (foil together with intumescent systems). Most inventors claim the use of metal foil or sheet and fibres (woven or nonwoven) in conjunction, sometimes low-combustible fibres as in JP 200677551, JP 4347252, CN 2557778 (aluminium/polyester or polyamide), but mostly non-combustible fibres: JP 9177200, JP 8199709, JP 2043034, JP 10034786, JP 1261588, KR 102006022043, KR 102004065138, KR 100517732, EP 2116753, CN 201236395, US 4459334, US 4204019, US 4292361 (all use metal (Al) foil as the outermost layer with (glass) fibre underneath), and US 20030077419 (foil with holes, fibres). The aluminium/fibre material combination is also claimed in JP 2002023763 for sound insulation purposes; in e.g. US 4937125, JP 2215521, GB 1110579 and GB 1128611 for thermal insulation; in FR 2792667 and GB 1243136 for both purposes; a single aluminium foil layer is claimed in KR 102006115089 for waterproofing; however, in all a.m. cases fire performance is not targeted. Other inventors claim the use of low-combustible fibres (e.g. JP 2008201079, JP 80868164, CN 200992175) or non-combustible fibres (mainly glass fibres) only as an outer layer, sometimes in conjunction with other layers, such as in e.g. GB 882296 (glass fibre coating), EP 778634 (fibres in matrix, internal layer low-combustible material), DE 19815933 and SE 514501 (inorganic fibre layer, partially filled with non-combustibles), JP 10115045 (non-combustible fibre and bamboo layer), JP 8277586 (fibre on foam-filled honeycombs), GB 1386254 (fibre reinforced outer resin layer), DE 102006055377 and DE 19809973 (fibres/foils on intumescent layer). US 4 073 998 A discloses an insulating construction panel comprising two laminates, each having an outer skin of aluminium foil and a scrim composed of glass fibre yarns perpendicular to each other, which are separated by a foam core. US 4 414 265 A discloses an insulation board comprising a plastic foam layer covered on both sides by one facing panel. US 5 698 302 A discloses a foam laminate comprising at least one facer sheet comprising a first predominantly glass fibre mat having first and second outer surfaces and a polymeric material coated onto said first outer surface. US 4 279 958 A discloses a composite panel comprising a cellular core to which is attached an upper layer and a lower layer of organic fibres, whereby an interposed layer of inorganic fibres, preferably glass fibres, is in contact with said cellular core and each of said upper and lower layers of organic fibres. GB 2 378 919 A discloses a laminate used for its thermal insulation and fire resistant properties comprising a rigid fire- resistant thermosetting synthetic polymer foam and a water-impermeable sheet, whereby the polymer foam has a facing made of glass fibre on one side and of aluminium foil on the other side. US 4025686, US 4073997, US 4118533 and others claim glass fibres as outer layer, and GB 1213010 claims the use of multiple fibre layers for building a structure, but both do not target fire performance explicitly. CN 1613640 mentions a double felt layer with flame retardant impregnation; DE 19640887 claims a layer of fibre-reinforced silicate for fire protection purposes. All these methods indeed cover a large variety of requirements concerning flame retardancy; however, their individual versatility is limited and their performance is strongly depending on the substrate, on how the layers are applied etc. Therefore, most of the a.m. inventions require or at least mention flame retardant properties for the substrate itself, too. Requirements and flammability test related approvals within the building industry become more and more global, but also more precise and application-related and therefore more challenging (e.g. ASTM E-84, EN 13823), as smoke creation and density are considered in addition to the flammability. Accordingly, we found during our research that the a.m. prior art is not suitable to safely reach the highest possible flame retardancy classes for organics (e.g. BS 1 for EN 13823/EN 13501-1, V-0 for UL 94 etc.) even for the most widespread polymer foam bases, and in some cases these systems even lead to worse performance (see table 1). Systems that perform better (e.g. at least reaching BS 3 or V-1 class, respectively) showed to be expensive, complex and neither economic nor ecologic. A general deficiency of the a.m. materials is the fact that the flame retardant measures taken will lead to incomplete combustion, thus particles being content of the smoke leading to high smoke density, together with partially high smoke creation, too. There are other reasons for the fail of the traditional protection systems that are discussed below. Some prior art is not based on traditional systems: KR 102006021127 reveals composites with a protective polymer layer on an aluminium foil layer which itself is on top of foam, however, this system is not claimed for fire protection performance, and possibly would not match the respective requirements as the polymer is too easy burning. CH 650196 is describing an interesting composite said to be flame-retardant where the aluminium foil is perforated and being the second layer, covered by an outer layer of polyester fibres containing flame-retardants. Also the a.m. JP 8199709 is describing a system where the metal foil does not necessarily have to be the outermost layer. However, even these non-classic systems show deficiencies concerning applicability, reproducibility and consistency of the fire test results according to our research. For example, JP 8199709 correctly describes that the slow-burning outer layer containing flame retardant agents will disperse the heat of the burn by aid of the aluminium conductor beneath, however, we found that from a certain point of time on this dispersion ability is saturated and the overheating of the metal layer will cause an undesired flashover of both the outer layer and the substrate, leading to complete combustion of the composite around the foil. The composite mentioned in CH 650196 will show this effect at a slightly later point of time, but will end in a flashover anyway. The reason for the retarding of the flashover here is due to the perforation of the foil allowing the heat to disperse even into the substrate, but not up to a critical level where flammable gases would be formed. Eventually, also the correct assumption of GB 2222185 that a first layer that can melt away from flames would be of protective function showed to be of no use when applied for a.m. testing methods and approvals as the melt layer finally ignited spontaneously anyway. Additionally we observed significant creation of dark and/or dense smoke before and after the flashover in all three cases which would be another negative criterion concerning approvals.

A major object of the present invention thus is to provide a fire protection system that is versatile, reliable, economic and easy to apply and will fulfil modern regulations in the respective application fields by dispersing flame and its heat to a maximum possible extent before it can reach or be transferred to the foam substrate, and suppressing the formation of smoke best way possible.

Surprisingly, it is found that such a versatile material not showing the above mentioned disadvantages can be achieved when turning the state-of-the-art system round and using glass fibres as the outermost layer with a metal foil layer underneath with appropriate properties for flame spread and heat dispersion, as well as for permeability for gases, but not for solid smoke particles

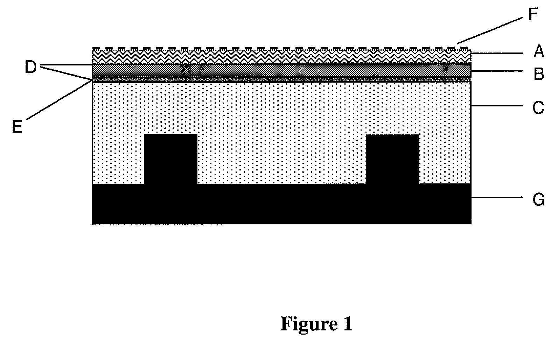

The claimed material contains compound (A), see fig. 1, which is at least one glass fibre layer being applied as outermost layer on all surfaces of the substrate that bear the possibility of fire exposition, but at least applied e.g. on one side of a planar substrate, such as building and insulation panels. The glass fibres may be of any kind as available on the market, however, preferred are glass fibres with a non-organic treatment (e.g. silane based), as organic processing aids widely used in the yarn and textile industry (such as stearic acids, animal and vegetable fats and oils etc.) may have a negative impact on flammability. The fibre may be in the state of fabric or nonwoven. Preferred are tissue meshes including unidirectional weaves due to their better defined permeability/mesh size and due to their mechanical properties providing both surface strength and good internal and external bonding. A preferred mesh size for the tissue is 0.01 to 0.80 mm, especially preferred from 0.04 to 0.25 mm; a preferred thread density would be 5 to 250 threads per cm, especially preferred are 20 to 60 threads per cm.

The claimed material furthermore contains compound (B) as second outermost layer which is at least one layer of non-perforated metal foil, preferably aluminium due to its good heat conductivity, good sealing property and excellent properties concerning the application (bonding/adhesion, compatibility etc.), wherein a preferred thickness range for the foil is 1-400 microns, especially preferred are 2-50 microns

The claimed material includes a substrate compound (C) underneath the (A) and (B), which is consisting of at least one layer of expanded polymer in a crosslinked and non-crosslinked state, such as, but not exclusively, organic foams and sponges (i.e. open cell and closed cell cellular polymers) of thermoplasts (e.g. polyolefins, polyesters including polyurethanes and PET/PBT, polyethers etc.) and thermosets (resins, e.g. phenolic, acrylic, melamine based etc.), thermoplastic elastomers (including PVC, PUR), elastomers (with backbones containing carbon only, or additionally oxygen, silicon etc., e.g. BR, SBR, NBR, IIR, ACM/AEM, FPM/FKM, EPM/EPDM, ECO, Q etc.), latices etc., see fig. 1. The substrate (C) can consist of one of the a.m. compounds or of any combinations thereof. The substrate compound(s) forming (C) may contain any combination of fillers, fibres, crosslinking systems, plasticizers, stabilizers, colorants, foaming agents etc. and the like and any other additives that are used in the rubber and plastics industry, and may be existing as separate material layers or as one layer consisting of blends of materials, means, (C) can consist of at least one expanded layer and none to multiple expanded and unexpanded layers.

The claimed material contains a suitable system for adhesion (D) to bond the compounds (A), (B) and (C) to each other, respectively, see fig. 1. Preferred are adhesion systems that are either fully compatible to the substrate to ensure good bonding (means, based on the substrate's polymer compound) or preferably with intrinsic flame retardant properties. Especially preferred are adhesives containing halogenated or phosphorous compounds, e.g. being based on elastomers such as chloroprene, PVC, or the like. The adhesion system (D) does not have to be of same composition for bonding the layers (A) and (B) or (B) and (C), respectively, and can be freely chosen to match the individual requirements best possible.

The claimed material furthermore may contain additional functional layers (E) between (B) and (C) that can contribute both to the mechanical strength necessary for the intended application as well as to the fire retardant properties, see fig 1. The compounds for (E) thus may be e.g. fibres, foils, papers, sheet etc. in various forms, but also self-ceramifying, charforming or intumescent compounds or compounds releasing flame-stopping or cooling or diluting substances, such as gas, vapour, liquids, halides etc., in case of fire. The compounds (E) may be bond to other compounds of the material by (D) or adhere by themselves.

The claimed material furthermore may contain additional functional layers (F) as covering on (A) to act e.g. as a shielding, a reinforcing or as a decorative layer, see fig 1. Preferred are layers that will either be flame-retardant themselves or easily be burning or melting away so not to disturb the functioning of the (A) (B) (C) layer system. The compounds (F) may be bond to other compounds of the material by (D) or adhere by themselves.

The claimed material furthermore may contain any further element (G) necessary for the intended application, such as wire inlays in case of cables or the like, massive parts such as wood, glass, metal or concrete structures for building purposes etc., see fig. 1. The compounds (G) may be bond to other compounds of the material by (D) or adhere by themselves.

A major advantage of the claimed material is its suitability for "fire critical" applications where low flame spread and/or low smoke generation are required (e.g. ASTM E-84, EN 13823/EN 13501-1, see Table 1). The effect ranging from flame-retardant to even flame-preventing is provided by the special effect the layers of the claimed material will generate on the formation and on the migration of flammable gases in combination with the flame and heat dispersion, according to our results:
1. When hitting the first layer of fabric the flame is dispersed over a high surface and the net heat creation per surface unit thus is lowered significantly in comparison with smooth and/or closed surfaces, such as foil or sheet. Also the heat penetration into the composite is lower due to the mentioned dispersion, but also due to the low heat conductivity of the fibre in comparison with metal foils or polymeric layers.
2. When approaching the second layer the already weakened heat and flame will be either a. reflected by the metal foil or be further dispersed by the second fabric layer. In case the heat would penetrate deeper into the foam part of the composite the resulting combustible gases will either be entrapped by the foil (tear of the foil due to gas pressure is prevented by the outer fibre layer, a phenomenon which is also not provided by prior art) and thus being kept away from possible flashover;
b. or the second fabric layer will slow down the migration of these gases to the surface or flame front.

Both effects 2a and 2b will prevent a flashover and together with 1 will result in a controlled slow, burn (slow, but supplied with sufficient oxygen) that will not create much smoke in comparison with standard flame retardant systems that will lead to a "suppressed" burn (insufficient oxygen) with high smoke creation due to incomplete combustion (compare Table 1: SMOGRA and TSP values, Table 2: improvement of SMOGRA values by applying the claimed system).

A very prominent advantage of the claimed material is its versatility concerning the fire tests and the results being almost independent from the substrate (see Table 2).

A further advantage of the claimed material linked to a.m. advantage is the fact that no additional measures have to be taken to render the substrate fire retardant (see e.g. PET in table 2).

This leads to a further advantage of the claimed material which is the free and economic as well as ecologic choice for foam substrate and its ingredients.

This leads to another advantage of the claimed material as no halogenated fire retardants are needed to achieve demanded flame resistance. Especially brominated flame retardants are critical for environmental issues and can generate toxic fumes in case of fire. For that reason brominated flame retardants are already partially prohibited.

A further advantage of the claimed material is the fact that in its preferred compositions it is free of both fibres and PVC, both of them being under survey and being discussed for environmental and health issues.

A further advantage of the claimed material is that its flame retardant properties are almost independent from the geometry of the part to be fire protected.

A further advantage of the claimed material is the possibility to adapt its properties to the desired property profile (concerning mechanics, damping, insulation, flexibility, etc.) by adaptation of the foil thickness and/or the fibre diameter, length, tissue den, braiding angle etc.

It is a prominent advantage of the claimed material that it can be produced in an economic way in a continuous process, e.g. by extrusion and co-lamination. It shows versatility in possibilities of manufacturing and application. It can be extruded, co-extruded, laminated, moulded, co-moulded, overmoulded, welded etc. directly as a multilayer system and thus it can be applied in unrestricted shaping onto various surfaces in automotive, transport, aeronautics, building and construction, furniture, machinery engineering and many other industries, even by a thermoforming or other shaping methods following the manufacturing process of the material.

It is a further advantage of the claimed material that it can be transformed and given shape by standard methods being widespread in the industry and that it does not require specialized equipment.

Another advantage of the material is the fact that the compound (C) can contain scrapped or recycled material of the same or other kind to a very high extent not losing its fire retardant properties (see Table 2.).

A further advantage of the claimed material is its wide temperature range only being determined by the expanded polymer. As an example, a claimed material with expanded silicone elastomer (MVQ) as compound (C) may be used from -100°C up to +300°C, or up to 400°C with thermoset foams.

A further advantage of the claimed material is its suitability for thermal and sound/vibration insulation applications, ranging from very low to very high temperatures as mentioned above, with the additional advantage that aluminium foil will act as a vapour barrier and as a reflector and glass fibre acts as an additional insulation layer.

A further advantage of the claimed material is its impact resistance against mechanical load, pressure, notch formation, cuts and bites, including attack by rodents or termites or the like, which is another advantage for outdoor insulation purposes.

### Examples

In the following examples and comparative examples the required foams were acquired on the market (class 0 = classO/Afmaflex^{®}, Armacell Ltd., Oldham; AF = AF/Armaflex^{®}, Armacell GmbH, Münster; same polymer base, but varied additives) or being produced according to state of the art procedures to 25 mm thickness samples. The protective layers were put on the foam parts by slight and constant pressure using adhesives or the like that were available on the market (Hapuflam^{®}: fire protection multilayer fabric system, Hapuflam GmbH, Zellertal; Flammotect: fire protection paint/coating, b.i.o. Brandschutz GmbH, Seevetal, both self-adhesive, others: Adhesive 520, Armacell GmbH, Münster). In the case of the comparative examples the layers were applied as close as possible to the processing provided by the respective literature.

**Table 1: flammability test results of foam compounds according to EN 13823/EN 13501-1 (single burning item/round corner test): flammability and determination of Total Heat Release (THR), Fire Growth Rate (FIGRA), Smoke Growth Rate (SMOGRA) and Total Smoke Production (TSP) by EN 13823; flammability classification in accordance with EN 13501 (best individual classifications: B, S1, d0). The examples without asterisks comprise claimed material**

| **Foam base** | **Protective layers** ***=comparative example** | **Figra** | **THR 600** | **figra 0,2** | **Figra 0,4** | **Smogra** | **TSP 600** | **class** | **class SMO GRA** | **D class** |
|---|---|---|---|---|---|---|---|---|---|---|
| Melamine | alum. foil* | 330 | 1,0 | 345 | 330 | 24 | 44 | D | S1 | **d0** |
| | alum. foil+glass fibre | 0 | 0,3 | 0 | 0 | 0 | 29 | **B** | **S1** | **d0** |
| EPDM | none* | 779 | 8,3 | 779 | 779 | 1286 | 1121 | E | n.a. | n.a. |
| | alum. foil* | 521 | 10,5 | 521 | 521 | 587 | 1306 | D | S3 | d0 |
| | glass fibre* | 128 | 4,0 | 149 | 128 | 263 | 436 | C | S3 | d0 |
| | 2x glass fibre | 0 | 0,9 | 0 | 0 | 12 | 97 | **B** | **S2** | **d0** |
| | alum. foil+glass fibre | 5 | 1,1 | 5 | 5 | 0 | 22 | **B** | **S1** | **d0** |
| Class 0 | none* | 146 | 2,9 | 257 | 146 | 1151 | 315 | C | S3 | d0 |
| | glass fibre* | 84 | 1,2 | 41 | 84 | 335 | 286 | B | S3 | d0 |
| AF | none* | 76 | 2,1 | 76 | 33 | 1891 | 413 | B | S3 | d0 |
| | PTFE+glass nonwoven* | 648 | 2,3 | 654 | 648 | 544 | 379 | D | S3 | d0. |
| | Hapuflam fabric + Hapuflam CP* | 156 | 3,0 | 169 | 156 | 49 | 197 | C | S2 | d0 |
| | Flammotect S* | 271 | 4,7 | 278 | 271 | 272 | 527 | D | S3 | d0 |
| | Flammotect A* | 610 | 3,3 | 627 | 610 | 476 | 486 | D | S3 | d0 |
| | alum. foil* | 90 | 3,6 | 170 | 90 | 368 | 418 | C | S3 | d0 |
| | glass fibre+alum. foil* | 147 | 2,4 | 147 | 96 | 121 | 368 | C | S3 | d0 |
| | alum. foil+glass fibre | 0 | 1,0 | 0 | 0 | 36 | 101 | **B** | **S2** | **d0** |
| NBR | none* | 643 | 6,3 | 697 | 643 | 438 | 183 | D | S3 | d0 |
| | 2x glass fibre | 73 | 2,0 | 73 | 29 | 50 | 113 | **B** | **S2** | **d0** |
| | alum. foil+glass fibre | 0 | 1,6 | 0 | 0 | 18 | 30 | **B** | **S1** | **d0** |

**Table 2: fire test according to EN 13823/EN 13501-1 using the claimed system (A) (B) (C) with different foam layers (C), carried out on sheet-shaped material. The examples without asterisks comprise claimed material**

| **Foam base** | **Protective layers *=comparative example** | **class** | **class SMOGRA** | **D class** |
|---|---|---|---|---|
| Melamin (thermoset) | none* | C | S3 | d0 |
| | alum. foil+glass fibre | B | S1 | d0 |
| EPDM (rubber) 1) | none* | E | n.a. | n.a. |
| | alum. foil+glass fibre | B | S 1 | d0 |
| NBR/PVC (rubber/TPE) 1) | none* | C | S3 | d0 |
| | alum. foil+glass fibre | B | S2 | d0 |
| NBR (nitrilbutadiene rubber) | none* | D | S3 | d0 |
| | alum. foil+glass fibre | B | S1 | d0 |
| MVQ (Silikonkautschuk) | none* | D | S1 | d0 |
| | alum. foil+glass fibre | B | S1 | d0 |
| PET (thermoplast) + flame retardant agent | none* | D | S3 | d1 |
| | alum. foil+glass fibre | B | S 1 | d0 |
| PET (thermoplast) 1) | none* | E | n.a. | n.a. |
| | alum. foil+glass fibre | B | S1 | d0 |
| PET, based on recycled material +flame retardant agent | none* | E | n.a. | n.a. |
| | alum. foil+glass fibre | B | S1 | d0 |
| PET, based on recycled material | none* | E | n.a. | n.a. |
| | alum. foil+glass fibre | B | S1 | d0 |

| | | | | |
|---|---|---|---|---|
| 1) The systems based on NBR/PVC, EPDM and PET have been tested according to ASTM E84 standard (tunnel burn test) reaching the classification 25/50 (best in class). | | | | |

## Claims

1. A material consisting of an expanded polymer as a core being covered with at least one inner protective layer consisting of a metal foil and with at least one outer protective layer consisting of glass fibres wherein the outer protective layer is the outermost layer.

2. The material according to claim 1 wherein the metal foil is aluminium.

3. The material according to claim 2 wherein the thickness of the aluminium foil is 1-400 microns, preferably 2-50 microns.

4. The material according to claims 1 or 2 wherein the glass fibre is in the form of a weave fabric, knitted fabric or unidirectional weave.

5. The material according to claim 4 wherein the glass fibre is coated by non-organic substances.

6. The material according to anyone of claims 1-4 wherein the mesh size of the glass fibre is 0.01 to 0.80 mm, especially preferred from 0.04 to 0.25 mm.

7. The material according to anyone of claims 1-4 wherein the preferred thread density of the glass fibre is 5 to 250 threads per cm, especially from 20 to 60 threads per cm.

8. The material according to anyone of claims 1-7 wherein the outer protective layer (A) and the inner protective layer (B) or the inner protective layer (B) and the substrate compound layer (C) are bond with an adhesive.

9. The material according to claim 8 wherein the adhesive has flame-retardant properties.

10. The material according to claim 9 wherein the adhesive is based on chloroprene.

11. The material according to anyone of claims 1-10 wherein additional layers are applied for reinforcement and decoration purposes.

12. A process for manufacturing the material according to anyone of claims 1-11 in a continuous process.

13. The process for manufacturing the material according to claim 12 in a continuous two-step-extrusion and lamination process.

14. The use of a material according to anyone of claims 1-11 for protection purpose.

15. The use of a material according to claim 14 for applications requiring protection against temperature and/or fire and/or noise/vibration.

16. The use of a material according to anyone of claims 1-11 for thermal and/or acoustic insulation and/or acoustic and/or vibration damping insulation and/or fire protection insulation.

17. The use of a material according to claim 16 for thermal and/or sound insulation and/or fire protection insulation inside and outside of structures, vessels, containers and pipes, such as walls, ceilings, floors, roofs, tanks, tubes, and ducts.

## Patentansprüche

1. Material, bestehend aus einem geschäumten Polymer als Kern, überzogen mit wenigstens einer inneren Schutzschicht, bestehend aus einer Metallfolie, und mit wenigstens einer äußeren Schutzschicht, bestehend aus Glasfasern, wobei die äußere Schutzschicht die äußerste Schicht darstelle.

2. Material nach Anspruch 1, wobei die Metallfolie Aluminium ist.

3. Material nach Anspruch 2, wobei die Dicke der Aluminiumfolie 1 - 400 µm, vorzugsweise 2 - 50 µm beträgt.

4. Material nach Anspruch 1 oder 2, wobei die Glasfaser in Form eines gewebten oder gewirkten Textils oder eines unidirektionalen Gewebes vorliegt.

5. Material nach Anspruch 4, wobei die Glasfaser mit nichtorganischen Substanzen beschichtet ist.

6. Material nach einem der Ansprüche 1 bis 4, wobei die Maschengröße der Glasfaser 0,01 bis 0,80 mm, insbesonders bevorzugt 0,04 bis 0,25 mm beträgt.

7. Material nach einem der Ansprüche 1 bis 4, wobei die bevorzugte Fadendichte der Glasfaser 5 bis 250 Fäden pro cm, insbesondere 20 bis 60 Fäden pro cm beträgt.

8. Material nach einem der Ansprüche 1 bis 7, wobei die äußere Schutzschicht (A) und die innere Schutzschicht (B) oder die innere Schutzschicht (B) und die Substratcompoundschicht (C) durch einen Kleber miteinander verbunden sind.

9. Material nach Anspruch 8, wobei der Kleber Flammschutzeigenschaften aufweist.

10. Material nach Anspruch 9, wobei der Kleber auf Chloropren beruht.

11. Material nach einem der Ansprüche 1 bis 10, wobei die zusätzlichen Schichten zur Verstärkung und für Dekorationzwecke aufgebracht werden.

12. Verfahren zur Herstellung des Materials nach einem der Ansprüche 1 bis 11 in einem kontinuierlichen Verfahren.

13. Verfahren zur Herstellung des Materials nach Anspruch 12 in einem kontinuierlichen Zweistufenextrusions- und Laminierverfahren.

14. Verwendung des Materials nach einem der Ansprüche 1 bis 11 für Schutzzwecke.

15. Verwendung des Materials nach Anspruch 14 für Verwendungszwecke, die einen Schutz vor Temperatureinwirkung und/oder Feuer und/oder Lärm/Schwingungen erforderlich machen.

16. Verwendung des Materials nach einem der Ansprüche 1 bis 11 für Wärme- und/oder Schallisolierung und/oder Schall- und/oder Schwingungsdämpfungsisolierung und/oder Feuerschutzisolierung.

17. Verwendung des Materials nach Anspruch 16 zur Wärme- und/oder Schallisolierung und/oder Feuerschutzisolierung innerhalb oder außerhalb von Gebäuden, Gefäßen, Containern und Rohren, wie Wänden, Decken, Fußböden, Dächern, Tanks, Schläuchen und Rohrleitungen.

## Revendications

1. Matériau constitué d'un polymère expansé sous la forme d'un noyau étant recouvert d'au moins une couche protectrice interne constituée d'une feuille métallique et d'au moins une couche protectrice externe constituée de fibres de verre, dans lequel la couche protectrice externe est la couche la plus externe.

2. Matériau selon la revendication 1, dans lequel la feuille métallique est en aluminium.

3. Matériau selon la revendication 2, dans lequel l'épaisseur de la feuille d'aluminium est de 1 à 400 microns, de préférence de 2 à 50 microns.

4. Matériau selon la revendication 1 ou 2, dans lequel la fibre de verre est sous la forme d'un tissu tissé, d'un tissu tricoté ou d'un tissage unidirectionnel.

5. Matériau selon la revendication 4, dans lequel la fibre de verre est recouverte par des substances non organiques.

6. Matériau selon l'une quelconque des revendications 1 à 4, dans lequel la taille des mailles de la fibre de verre est de 0,01 à 0,80 mm, particulièrement préférée de 0,04 à 0,25 mm.

7. Matériau selon l'une quelconque des revendications 1 à 4, dans lequel la densité de fil préférée de la fibre de verre est de 5 à 250 fils par cm, en particulier de 20 à 60 fils par cm.

8. Matériau selon l'une quelconque des revendications 1 à 7, dans lequel la couche protectrice externe (A) et la couche protectrice interne (B) ou la couche protectrice interne (B) et la couche de composé substrat (C) sont liées avec un adhésif.

9. Matériau selon la revendication 8, dans lequel l'adhésif présente des propriétés ignifuges.

10. Matériau selon la revendication 9, dans lequel l'adhésif est à base de chloroprène.

11. Matériau selon l'une quelconque des revendications 1 à 10, dans lequel des couches supplémentaires sont appliquées à des fins de renforcement et de décoration.

12. Procédé de fabrication du matériau selon l'une quelconque des revendications 1 à 11 dans un procédé continu.

13. Procédé de fabrication du matériau selon la revendication 12 dans un procédé continu d'extrusion et de laminage en deux étapes.

14. Utilisation d'un matériau selon l'une quelconque des revendications 1 à 11 à des fins de protection.

15. Utilisation d'un matériau selon la revendication 14 pour des applications nécessitant une protection contre la température et/ou le feu et/ou le bruit/les vibrations.

16. Utilisation d'un matériau selon l'une quelconque des revendications 1 à 11 pour une isolation thermique et/ou acoustique et/ou une isolation par amortissement acoustique et/ou des vibrations et/ou une isolation de protection contre l'incendie.

17. Utilisation d'un matériau selon la revendication 16 pour une isolation thermique et/ou sonore et/ou une isolation de protection contre l'incendie intérieure et extérieure de structures, de récipients, de conteneurs et de tuyaux, tels que des murs, des plafonds, des planchers, des toits, des réservoirs, des tubes et des conduits.
